# EUROPÄISCHE PATENTANMELDUNG

(11) **EP 2 251 241 A1**
(43) Veröffentlichungstag der Anmeldung: **17.11.2010**
(21) Anmeldenummer: 09160388.6
(22) Anmeldetag: 15.05.2009
(51) Int. Cl.: B62B 3/04, B62B 5/00

(54) **Transportierhilfegerät und Transportsystem mit solchen Transportierhilfegeräten**

(71) Anmelder: ABB Schweiz AG, 5400 Baden (CH)
(72) Erfinder: Gugger, Martin, CH-5300, Ennetturgi (CH); Brunner, René, CH-5313, Klingnau (CH)
(74) Vertreter: ABB Patent Attorneys

(57) **Zusammenfassung**

Die Erfindung betrifft ein Transportierhilfegerät (1) zum Verschieben von schweren Lasten, umfassend:
- ein Aufnahmeelement (2) zum formschlüssigen Aufnehmen eines Standelements (11) eines Trägerelements
- mindestens zwei Rolleneinrichtungen (3,4) mit jeweiligen Rollen (44,42), wobei die Rolleneinrichtungen (3,4) so mit dem Aufnahmeelement (2) verbunden sind, dass bei Aufsetzen des Transportierhilfegerät (1) auf eine Lauftläche das Aufnahmeelement (2) von der Lauffläche beabstandet und auf dieser verfahrbar ist. Darüber hinaus wird ein Transportsystem mit solchen Transportierhilfegeräten angegeben.

## Beschreibung

### Technisches Gebiet

Die Erfindung betrifft ein Transportierhilfegerät in Form eines Untersatzes, insbesondere für schwere Lasten, und ein Transportsystem mit solchen Transportierhilfegeräten nach den Oberbegriffen der unabhängigen Ansprüche.

### Stand der Technik

Transportierhilfegeräte sind aus dem Stand der Technik hinreichend bekannt. Insbesondere kennt man mit mehreren Rollen versehene Transportierhilfegeräte zum Anordnen unter einer großen Last, so dass diese in einfacher Weise mithilfe der Rollen verschoben werden kann. Diese Transportierhilfegeräte weisen in der Regel ebene Auflageflächen auf, auf die die Last mit einer Standfläche abgesetzt werden kann.

Große Lasten werden häufig auf Trägerelementen transportiert, wie z.B. Euro-Paletten, die keine durchgehende Standfläche auf dem Untergrund aufweisen, sondern mehrere Querstreben als Standelemente aufweisen. Die Querstreben sind unterseitig an einer Trägerfläche angeordnet, um mehrere Einzelelemente, die die Trägerfläche bilden, wie z.B. einzelne Bretter, zusammenzuhalten. Die Querstreben sind dazu beispielsweise an beiden Seiten und mittig an der Unterseite der Trägerfläche angeordnet.

Um eine auf einem solchen Trägerelement befindliche schwere Last mithilfe eines Transportierhilfegerätes sicher zu transportieren, müsste dieses etwa die Fläche des Trägerelements aufweisen oder größer als dieses sein. Solche Trägerelemente wären jedoch im nicht verwendeten Zustand sehr sperrig und benötigen dann eine große Stellfläche.

Weiterhin sind Transportierhilfegeräte bekannt, die zwei Trägerarme aufweisen, die zwischen die zwei äußeren Querstreben des Trägerelementes eingreifen und durch ein Hebemechanismus das Trägerelement anheben können. Dabei kann sich jedoch das Trägerelement auf den Trägerarmen verschieben und zu einem Umfallen der zu transportierenden Last führen. Zudem ist ein solches Transportierhilfegeräte groß und nicht in einfacher Weise handhabbar.

### Darstellung der Erfindung

Es ist daher Aufgabe der vorliegenden Erfindung, ein verbessertes Transportierhilfegerät zur Verfügung zu stellen, mit dem schwere Lasten, insbesondere schwere Lasten auf Trägerelementen bzw. schwere Lasten, an deren Unterseiten Querstreben als Standelemente angeordnet sind, leicht verschieblich zu machen, so dass die schweren Lasten in einfacher Weise bewegt werden können. Diese Aufgabe wird durch das Transportierhilfegerät nach Anspruch 1 und das Transportsystem nach dem nebengeordneten Anspruch gelöst.

Weitere vorteilhafte Ausgestaltungen sind in den abhängigen Ansprüchen angegeben.

Gemäß einem Aspekt ist ein Transportierhilfegerät zum Verschieben einer schweren Last vorgesehen. Das Transportierhilfegerät umfasst:
- ein Aufnahmeelement zum formschlüssigen Aufnehmen eines an der Last angeordneten Standelements;
- mindestens zwei Rolleneinrichtungen mit jeweiligen Rollen, wobei die Rolleneinrichtungen so mit dem Aufnahmeelement verbunden sind, dass bei Aufsetzen des Transportierhilfegerät auf eine Lauffläche das Aufnahmeelement von der Lauffläche beabstandet und auf dieser verfahrbar ist.

Eine Idee der Erfindung besteht darin, Transportierhilfegeräte vorzusehen, die an die Standelemente einer Last bzw. eines Trägerelementes, auf dem die Last angeordnet ist, angepasst sind, so dass die Standelemente jeweils in dem Aufnahmeelement des Transportierhilfegeräts insbesondere formschlüssig aufgenommen werden können und dort weiterhin vorzugsweise verrutsch- und verkippsicher gehalten werden. Das Transportierhilfegerät weist Rolleneinrichtungen auf, die es ermöglichen, das Trägerelement bzw. die Last zu verschieben. Dazu müssen mindestens zwei derartige Transportierhilfegeräte für mindestens zwei der Standelemente vorgesehen werden. Durch die getrennte Ausbildung der Transportierhilfegeräte für jedes der Standelemente des Trägerelementes bzw. der Last nehmen diese im unbenutztem Zustand nur wenig Lagerraum ein und sind einfach zu handhaben.

Weiterhin können einer oder mehrere Anschläge zum stirnseitigen Begrenzen einer Aufnahmewanne des Aufnahmeelements vorgesehen sein.

Gemäß einer Ausführungsform kann mindestens eine der Rolleneinrichtungen eine Rolle aufweisen, die um eine Schwenkachse verschwenkbar angeordnet ist, wobei die Schwenkachse im wesentlichen senkrecht zu der Lauffläche verläuft.

Gemäß einer Ausführungsform kann mindestens eine der Rolleneinrichtungen eine Rolle aufweisen, die eine Rollrichtung aufweist, die im wesentlichen der Verbindungsachse zwischen zwei der Rolleneinrichtungen entspricht.

Ferner kann an einem Ende des Aufnahmeelements in Richtung einer Verbindungsachse zwischen den Rolleneinrichtungen ein Handgriff angeordnet sein.

Gemäß einem weiteren Aspekt ist ein Transportsystem mit mehreren der obigen Transportierhilfegeräte und mit einem Trägerelement oder mit einer Last, die mehrere voneinander beabstandete Standelemente aufweisen, wobei die Standelemente von einer Unterseite des Trägerelementes bzw. Last abstehend ausgebildet sind und in einem zusammengesetzten Zustand in den Aufnahmeelementen von zugeordneten Transporthilfegeräten zumindest teilweise formschlüssig aufgenommen sind.

Weiterhin können die Aufnahmeelemente der Transportierhilfegeräte jeweils das entsprechende Standelement des Trägerelements im zusammengesetzten Zustand so formschlüssig aufnehmen, dass ein Verkippen des Transportierhilfegeräts an dem Standelement verhindert wird.

### Kurze Beschreibung der Zeichnungen

Ausführungsformen werden nachfolgend anhand der beigefügten Zeichnungen näher erläutert. Es zeigen:
- Figuren 1a bis 1c: eine Seitenansicht, eine Draufsicht und eine Querschnittsansicht ent- lang der Schnittlinie A-A für eine Transportiervorrichtung gemäß einer ersten Ausführungsform;
- Figur 2: eine Draufsicht auf eine Unterseite eines Trägerelements; und
- Figuren 3a bis 3c: eine Seitenansicht, Draufsicht und eine Schnittansicht entlang der Schnittlinie B-B für eine Transportiervorrichtung gemäß einer zweiten Ausführungsform.

### Wege zur Ausführung der Erfindung

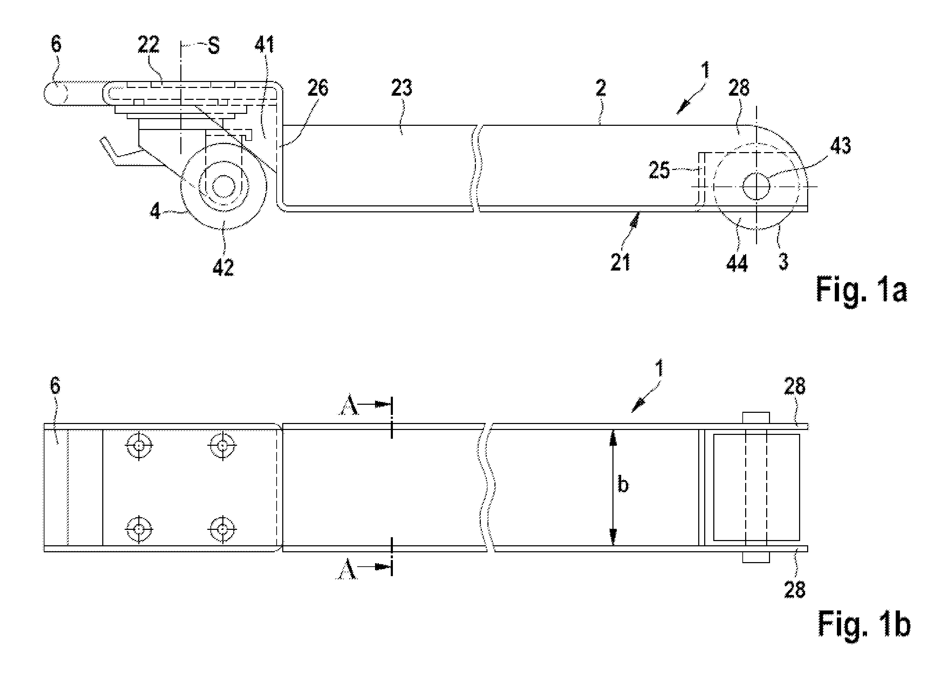

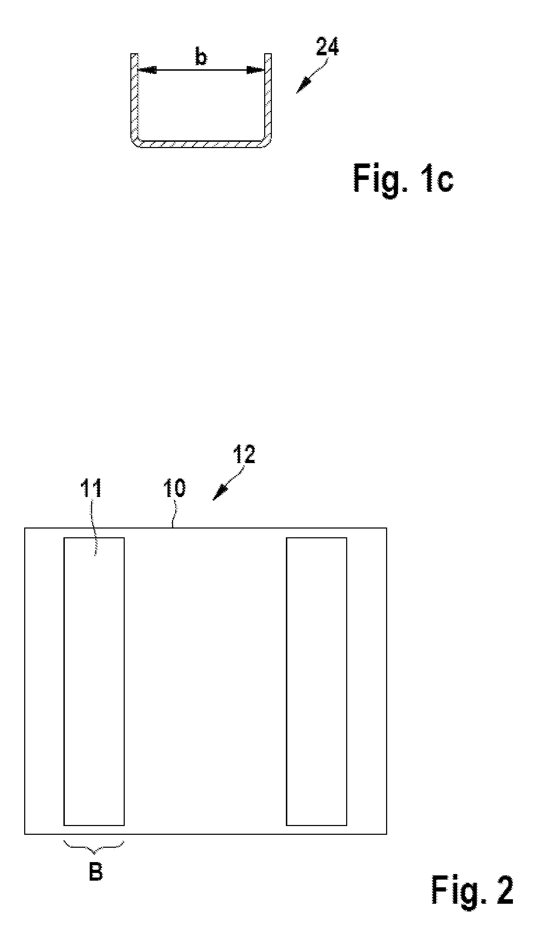

In den Figuren 1a bis 1c sind verschiedene Ansichten eines Transportierhilfegeräts 1 gemäß einer ersten Ausführungsform dargestellt. Das Transportierhilfegerät 1 umfasst ein Aufnahmeelement 2 mit beispielsweise U-förmigem Querschnitt, der in Fig. 1c als Schnittansicht entlang der Schnittlinie A - A dargestellt ist. An bzw. nahe zwei gegenüberliegenden Enden des Aufnahmeelementes 2 ist eine erste Rolleneinrichtung 3 und eine zweite Rolleneinrichtung 4 angeordnet, die jeweils eine Rolle aufweisen. Die jeweiligen Rollen sind so angeordnet, dass bei Auflegen auf die Bodenfläche das Aufnahmeelement 2 über eine Bodenfläche angehoben wird und auf dieser verfahren werden kann. Zwischen den Rolleneinrichtungen 3, 4 ist das Aufnahmeelement 2 mit einer Aufnahmewanne 23 mit einem U-förmigen Profil versehen.

Im gezeigten Ausführungsbeispiel umfasst die erste Rolleneinrichtung 3 eine breite, nicht schwenkbeweglich aufgehängte Rolle 44, die um eine Rollenachse 43 drehbar ist. Die Rollenachse 43 der ersten Rolleneinrichtung 3 ist an dem Aufnahmeelement 2 so angeordnet, dass an einer Unterseite 21 des Aufnahmeelementes 2 die Rolle 44 hervorsteht.

Die erste Rolleneinrichtung 3 ist im Wesentlichen am an einem ersten Ende des Aufnahmeelementes 2 zum ersten Ende hin fortgesetzten Schenkeln 28 des U-förmigen Profils angebracht. Die überstehenden Schenkelenden sind nach oben hin abgerundet, so dass eine Beschädigung der zu transportierenden Last vermieden werden kann, wenn diese versehentlich auf einen der überstehenden Schenkel 28 aufgesetzt wird.

Die zweite Rolleneinrichtung 4 ist an einem der ersten Rolleneinrichtung 3 gegenüberliegenden zweiten Ende des Aufnahmeelementes 2 angeordnet. Die zweite Rolleneinrichtung 4 umfasst eine Schwenkanordnung 41, die es ermöglicht, eine zweite Rolle 42 der zweiten Rolleneinrichtung 4 um eine Achse S zu verschwenken, die senkrecht auf der Ebene der Bodenfläche steht. Auf diese Weise kann die Rollrichtung der zweiten Rolle 42 beliebig verändert werden. Die zweite Rolleneinrichtung 4 ist an einem Befestigungsschenkel 22 des Aufnahmeelements 2 angeordnet, der an dem betreffenden Ende des Aufnahmeelementes 2 angeordnet ist. Der Befestigungsschenkel 22 ist bezüglich einer Unterseite 21 (d.h. einer der Bodenfläche zugewandten Seite, Basis des U-förmigen Querschnitts) des Aufnahmeelementes 2 in Achsrichtung der Achse S von der Bodenfläche nach oben versetzt angeordnet. An einer der Bodenfläche zugewandten Seite des Befestigungsschenkels 22 ist die zweite Rolleneinrichtung 4 angeordnet. Die Lauffläche der zweiten Rolle 42 (Linie zwischen einer gemeinsamen Tangente der ersten und der zweiten Rolle 44, 42) ist bezüglich der Unterseite 21 des Aufnahmeelementes 2 beabstandet.

Vorzugsweise beträgt der Abstand zwischen der Lauffläche der zweiten Rolle 42 und der Unterseite 21 des Aufnahmeelementes 2 dem Abstand der Lauffläche der ersten Rolle 44 der Unterseite des Aufnahmeelementes 2, so dass die Unterseite des Aufnahmeelementes 2 im Wesentlichen parallel zu der Bodenfläche (Lauffläche der Rollen) verläuft. Am äußeren Ende des Befestigungsschenkels 22 kann ein Handgriff 6 angeordnet sein, mit dem das Transportierhilfegerät 1 über die Bodenfläche gezogen werden kann.

Mit Hilfe des obigen Transportierhilfegeräts 1 kann eine schwere Last, die sich z.B. auf einem Trägerelement 10 befindet, verfahren bzw. verschoben werden. Eine beispielhafte Darstellung eines solchen Trägerelementes 10 mit einer Draufsicht von unten ist in Fig. 2 dargestellt. Das Trägerelement 10 umfasst eine Trägerfläche 12, an dessen Unterseite Querstreben 11 als Standelemente angeordnet sind. Die Standelemente weisen an der der Trägerfläche 12 gegenüberliegenden Fläche jeweils Aufsetzflächen auf. Die der Unterseite der Trägerfläche 12 gegenüberliegende Oberseite dient als Standfläche für die zu transportierende Last. Das Trägerelement 10 kann z.B. eine Euro-Palette sein. Alternativ können die Querstreben 11 bzw. allgemein die Standelemente auch direkt an der zu transportierenden Last angeordnet oder angebracht sein.

Die Aufnahmewanne 23 ist so ausgebildet, dass darin eine der Querstreben 11 des Trägerelementes 10 aufgenommen werden kann, so dass das Trägerelement 10 formschlüssig gegen seitliches Verrutschen gehalten wird. Vorzugsweise ist die Höhe der Schenkel des U-förmigen Profils (die in Längsrichtung verlaufenden Seitenwände der Aufnahmewanne 23) des Aufnahmeelements 2 so gewählt, dass eine der Aufsetzflächen der Querstreben 11 auf dem Innenboden der Aufnahmewanne 23 aufliegt, d.h. die Höhe der Schenkel des U-förmigen Profils des Aufnahmeelements 2 ist kleiner als die Höhe der Querstreben 11.

Zwischen den überstehenden Schenkeln 28 liegt die erste Rolleneinrichtung 3 im Wesentlichen frei, so dass beim Unterschieben des Transportierhilfegeräts 1 unter das Trägerelement 10 diese mit der betreffenden Querstrebe über die Rolle 31 der ersten Rolleneinrichtung 3 in den Aufnahmebereich 23 gleiten kann. Dies ermöglicht es, dass das Trägerelement 10 nur um eine geringe Höhe angehoben werden muss, um das Transportierhilfegerät 1 unter die Querstrebe 11 zu verfahren.

Vorzugsweise wird die Aufnahmewanne 23 mit Hilfe der ersten Rolleneinrichtung 3 nur um eine geringe Höhe über die Bodenfläche angehoben, vorzugsweise zwischen ¼ bis ¾ des Radius der ersten Rolle 44 der ersten Rolleneinrichtung 3, so dass der Schwerpunkt der zu transportierenden Last, wenn deren Standelement in der Aufnahmewanne 23 vollständig aufgenommen worden ist, so wenig wie möglich durch die Transportierhilfegerät 1 angehoben wird. Dadurch wir die Stabilität des Transportsystems, insbesondere die Kippgefahr, so wenig wie möglich beein-trächtigt, da der Schwerpunkt der zu transportierenden Last nur unwesentlich angehoben wird.

Der Aufnahmebereich 23 des Aufnahmeelementes 2 ist zu den Rolleneinrichtungen 3, 4 hin mit einem ersten Anschlag 25 zur ersten Rolleneinrichtung 3 hin und mit einem zweiten Anschlag 26 zur zweiten Rolleneinrichtung 4 hin abgeschlossen, so dass die darin aufzunehmende Querstrebe 11 nicht aus der Aufnahmewanne 23 heraus und gegen eine der Rolleneinrichtungen 3, 4 verrutschen kann, wodurch diese blockiert werden könnten. Die Aufnahme der Querstrebe 11 in den Aufnahmebereich 23 des Aufnahmeelementes 2 erfolgt lose, d.h. die Abmessungen des Aufnahmebereich 23 sind größer als die Aufsetzfläche der Querstrebe 11 dimensioniert, so dass die Querstrebe 11 in den Aufnahmebereich 23 des Aufnahmeelements 2 einfach eingebracht und das Trägerelementes 10 aus dem Aufnahmebereich 23 einfach herausgehoben werden kann. Vorzugsweise liegt im zusammengesetzten Zustand die Aufsetzfläche der Querstrebe 11 auf einer Bodenfläche 24 der Aufnahmewanne 23 auf.

Dazu kann die Breite B der Querstrebe 11 bezüglich der inneren Breite b des Aufnahmebereichs 23 des Aufnahmeelements 2 so gewählt sein, dass die Querstrebe 11 einfach in dem Aufnahmebereich 23 aufgenommen werden kann, wobei die Höhe der Querstrebe 11 und die Höhe der Schenkel des U-förmigen Profils des Aufnahmebereichs 23 so gewählt sind, dass kein Verkippen des Aufnahmeelements 2 an der Querstrebe 11 erfolgen kann.

Zum Transportieren des Trägerelementes 10 ist vorgesehen, zwei oder mehr als zwei Transportierhilfegeräte 1 unter die beiden Querstreben 11 anzuordnen, so dass eine Verfahrbarkeit des zu transportierenden Gegenstandes auf dem Trägerelement 10 auf vier oder mehr als vier Rollen gewährleistet ist.

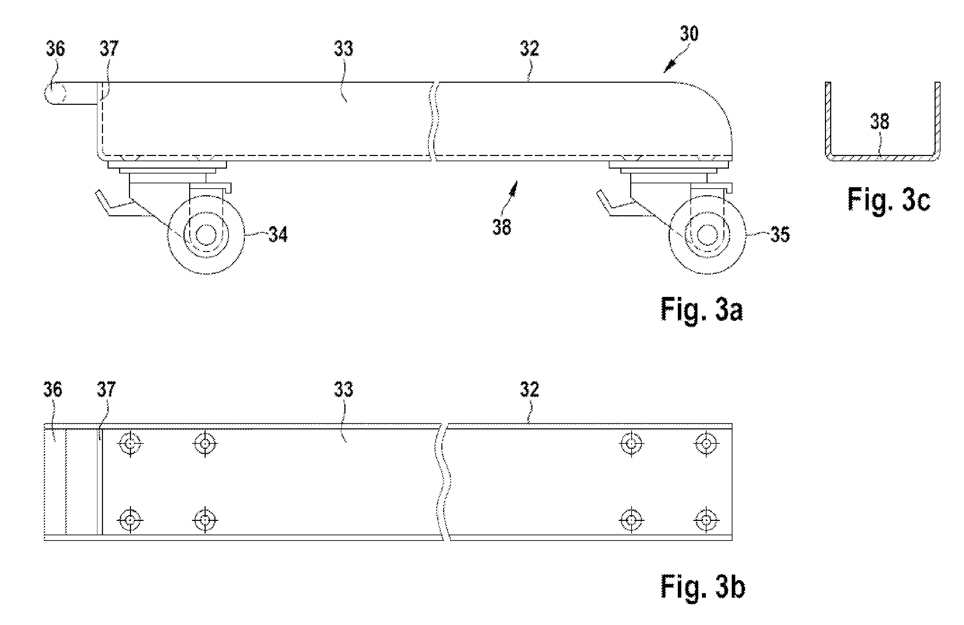

In den Figuren 3a bis 3c ist eine weitere Ausführungsform eines Transportierhilfegeräts 30 dargestellt. Das Transportierhilfegerät 30 der Fig. 3 umfasst das Aufnahmeelement 32 mit einer Aufnahmewanne 33 mit U-förmigem Querschnitt. Die Aufnahmewanne 33 weist nur an einem Ende einen Anschlag 37 auf, während das dem Anschlag 37 gegenüberliegende Ende offen ist, so dass die betreffende Querstrebe 11 des Trägerelements 10 mit der zu transportierenden Last in die Aufnahmewanne 23 hineingeschoben werden kann. An einer Unterseite 41 des Aufnahmeelementes 32 sind Rolleneinrichtungen 34, 35 an voneinander beabstandeten Positionen, insbesondere an den Enden der Aufnahmewanne 33, befestigt, die jeweils um eine Schwenkachse S, die senkrecht zu der Bodenfläche bzw. senkrecht zur Lauffläche von Rollen der Rolleneinrichtungen 34, 35 verläuft, verschwenkbar sind, so dass sich die Rollrichtungen von Rollen der Rolleneinrichtungen 34, 35 ändern kann. An dem mit dem Anschlag 37 versehenen Ende des Aufnahmeelements 2 ist ein Handgriff 36 angeordnet.

Da die Rolleneinrichtungen 34, 35 beide verschwenkbar ausgebildet sind, ist das Transporthilfegerät 1 instabil, kann kippen und in der Regel nicht ohne weitere Stützung aufrecht stehen. Aus diesem Grunde ist erforderlich, dass bei der Aufnahme der Querstrebe 11 des Trägerelements 10 in die Aufnahmewanne 33 das Aufnahmeelement 32 durch die Querstrebe 11 ausgerichtet wird, so dass dieses nicht verkippen kann. Dazu ist eine Dimensionierung der Aufnahmewanne 33 erforderlich, bei der die Querstrebe 11 einerseits ohne zusätzlichen Kraftaufwand in die Aufnahmewanne 33 eingebracht werden kann. Das Spiel zwischen den Außenseiten der Querstrebe 11 und den Schenkeln der Aufnahmewanne 33 sollte jedoch nicht so groß gewählt sein, dass ein seitliches Wegkippen des Aufnahmeelements 32 von der Querstrebe 11 möglich ist. Insbesondere bei der Ausführungsform der Figuren 3a bis 3c ist es sinnvoll, dass die Aufsetzfläche der Querstrebe 11 im verbundenen Zustand des Transportierhilfegeräts 30 mit dem Trägerelement 10 auf der Bodenfläche 38 der Aufnahmewanne 33 aufliegt, um so eine waagerechte Ausrichtung der Bodenfläche 38 bezüglich der Lauffläche der Rollen der Rolleneinrichtungen 34, 35 zu erreichen.

### Bezugszeichenliste

- 1: Transportierhilfegerät
- 2: Aufnahmeelement
- 3: erste Rolleneinrichtung
- 4: zweite Rolleneinrichtung
- 6: Handgriff
- 10: Trägerelement
- 11: Querstrebe
- 21: Unterseite
- 22: Befestigungsschenkel
- 23: Aufnahmewanne
- 24: Bodenfläche
- 25: erster Anschlag
- 26: zweiter Anschlag
- 28: Schenkel
- 30: Transportierhilfegerät
- 31: Rollenachse
- 32: erste Rolle
- 37: Anschlag
- 41: Schwenkanordnung
- 42: zweite Rolle
- 43: Rollenachse
- 44: erste Rolle

## Patentansprüche

1. Transportierhilfegerät (1) zum Verschieben einer schweren Last, umfassend:
- ein Aufnahmeelement (2) zum formschlüssigen Aufnehmen eines an der Last angeordneten Standelements;
- mindestens zwei Rolleneinrichtungen (3, 4) mit jeweiligen Rollen (44, 42), wobei die Rolleneinrichtungen (3, 4) so mit dem Aufnahmeelement (2) verbunden sind, dass bei Aufsetzen des Transportierhilfegerät (1) auf eine Lauffläche das Aufnahmeelement (2) von der Lauffläche beabstandet und auf dieser verfahrbar ist.

2. Transportierhilfegerät (1) nach Anspruch 1, wobei einer oder mehrere Anschläge zum stirnseitigen Begrenzen einer Aufnahmewanne des Aufnahmeelements (2) vorgesehen sind.

3. Transportierhilfegerät (1) nach Anspruch 1 oder 2, wobei mindestens eine der Rolleneinrichtungen (3, 4) eine Rolle (44, 42) aufweist, die um eine Schwenkachse verschwenkbar angeordnet ist, wobei die Schwenkachse (5) im wesentlichen senkrecht zu der Lauffläche verläuft.

4. Transportierhilfegerät (1) nach einem der Ansprüche 1 bis 3, wobei mindestens eine der Rolleneinrichtungen (3) eine Rolle (41) aufweist, die eine Rollrichtung aufweist, die im wesentlichen der Verbindungsachse zwischen zwei der Rolleneinrichtungen (3, 4) entspricht.

5. Transportierhilfegerät (1) nach einem der Ansprüche 1 bis 4, wobei an einem Ende des Aufnahmeelements (2) in Richtung einer Verbindungsachse zwischen den Rolleneinrichtungen (3, 4) ein Handgriff (6) angeordnet ist.

6. Transportsystem mit mehreren Transportierhilfegeräten (1) nach einem der Ansprüche 1 bis 5 und mit einem Trägerelement (10), das mehrere voneinander beabstandete Standelemente (11) aufweist, wobei die Standelemente (11) von einer Seite des Trägerelementes (10) abstehend ausgebildet sind und in einem zusammengesetzten Zustand in den Aufnahmeelementen (2) von zugeordneten Transporthilfegeräten (1) formschlüssig aufgenommen sind.

7. Transportsystem nach Anspruch 6, wobei die Aufnahmeelemente (2) der Transportierhilfegeräte (1) jeweils das entsprechende Standelement (11) des Trägerelements (10) im zusammengesetzten Zustand so formschlüssig aufnehmen, dass ein Verkippen des Transportierhilfegeräts (1) an dem Standelement (11) verhindert wird.
